# FASCICULE DE BREVET EUROPEEN

(11) **EP 1 094 359 B1**
(45) Date de publication et mention de la délivrance du brevet: **15.09.2004**
(21) Numéro de dépôt: 00402870.0
(22) Date de dépôt: 17.10.2000
(51) Int. Cl.: G03B 39/00, G05B 19/045, G03B 19/02

(54) **Système de déclenchement séquentiel pour une pluralité d'appareils photographiques**
System zur Folgeauslösung mehrerer Kameras
System for sequentially releasing a plurality of cameras

(30) Priorité: 20.10.1999 FR 9913076
(43) Date de publication de la demande: 25.04.2001
(73) Titulaire: Aerospatiale Matra Missiles, 75781 Paris Cedex 16 (FR)
(72) Inventeur: O'Connolly, Patrick, 91190 Gif sur Yvette (FR); Toineau, Michel, 78000 Versailles (FR)
(74) Mandataire: Weber, Etienne Nicolas

(56) Documents cités:
- US-A- 5 264 882
- US-A- 5 477 291
- US-A- 5 659 323
- US-A- 5 923 911

## Description

### Domaine technique

La présente invention se rapporte à un système de déclenchement séquentiel d'appareils photographiques et à un équipement de prise de vues équipé dudit système.

Dans le cadre de l'invention, on désigne par appareil photographique un dispositif de prise de vue du type vue par vue, par opposition aux caméras destinées à un enregistrement "continu" des images. Il s'agit par exemple d'un appareil reflex ou compact de format d'image 24x36, ou encore, éventuellement, d'un appareil à image numérique.

L'invention trouve des applications dans la photographie de phénomènes rapides, en particulier dans les domaines de la balistique, des études d'impacts de type "crash test", de l'analyse du mouvement dans le cadre sportif, ou encore de l'étude de la trajectoire et de l'évolution d'un projectile, par exemple.

### Etat de la technique antérieure

La plupart des appareils photographiques modernes, et en particulier les appareils à visée réflex, disposent d'un mode de fonctionnement, dit mode rafale. Dans ce mode de fonctionnement, l'appareil prend des vues successives aussi longtemps que le déclencheur est actionné. Les vues successives sont enregistrées à une cadence correspondant à la cadence maximum autorisée par l'appareil. Celle-ci dépend en particulier du dispositif d'avancement de film dont il est équipé.

Le mode de fonctionnement en rafale peut être mis à profit, par exemple, pour la photographie d'événements sportifs. Il permet en effet de saisir plusieurs images par seconde, avec, selon les appareils utilisés, un maximum de 6 à 8 images par seconde.

Dans certaines applications, cependant, une telle cadence s'avère insuffisante.

Une cadence de prises de vues plus élevée est possible avec une caméra à enregistrement "continu" telle qu'une caméra cinématographique ou une caméra vidéo (Caméscope). Les caméras permettent donc de saisir des phénomènes ou événements rapides et autorisent une meilleure décomposition de ceux-ci en une succession d'images instantanées.

La qualité des images des caméras à enregistrement "continu" est toutefois très inférieure à celle des appareils photographiques de type vue par vue. Elle est souvent insuffisante pour une analyse de détails des images individuelles successives.

On connaît également des équipements dans lesquels une pluralité d'appareils photographiques sont montés en batterie et pilotés par un ordinateur de façon à obtenir une cadence de déclenchement supérieure à la cadence en mode rafale des appareils individuels. On peut se reporter à ce sujet aux documents (1) et (2) dont les références sont précisées à la fin de la présente description.

Les équipements utilisant une batterie d'appareils photographiques présentent néanmoins un certain nombre de limitations ou difficultés.

Une première difficulté tient à la nécessité de transformer ou de reconfigurer le système de déclenchement lorsque le nombre d'appareils photographiques utilisés dans la batterie est modifié. Un problème identique se pose lorsque des appareils avec une cadence d'image différente en mode rafale sont utilisés.

Une seconde difficulté provient du fait qu'en mode rafale, les appareils achèvent généralement de façon rapide le nombre de vues imparti sur leur film. Il est donc nécessaire de changer de film pour chaque nouvelle série de prises de vues. Ce changement de film peut s'avérer délicat voire impossible lors de prises de vues en milieu hostile. Le changement de film dans tous les appareils est également une opération coûteuse en temps, qui impose une interruption relativement longue entre des séries successives de prises de vues.

Une autre difficulté tient au déclenchement des appareils photographique. Elle nécessite la présence d'un opérateur et la mise en place d'équipements au voisinage du sujet à photographier. Ces contraintes peuvent se révéler problématiques en cas de prises de vues en milieu hostile.

Le document US-A-5 659 323 divulgue un système comportant une batterie d'appareils photographiques permettant de produire une série d'images reproduisant un mouvement virtuel.

### Exposé de l'invention

L'invention a pour but de proposer un système de déclenchement séquentiel et un équipement de prise de vues permettant d'éviter dans une large mesure les difficultés mentionnées ci-dessus.

Un but est en particulier de proposer un système de déclenchement séquentiel pouvant être utilisé avec un nombre variable d'appareils photographiques et pour différentes valeurs de cadences de prise de vues des appareils.

Un autre but est de proposer un système permettant l'enregistrement de plusieurs séries de photographies, sans procéder systématiquement à des remplacements de films dans les appareils photographiques.

Encore un autre but est de pouvoir commander les appareils photographiques depuis un lieu éloigné du sujet de prise de vues et de pouvoir asservir la commande des appareils à un événement déterminé tel qu'une mise à feu par exemple.

Pour atteindre ces buts, l'invention a plus précisément pour objet un système de déclenchement séquentiel pour une pluralité d'appareils photographiques équipés d'un mode de prise de vues en rafale. Le système comprend :
- une horloge et des moyens pour fixer une fréquence d'horloge de ladite horloge en fonction d'un nombre d'appareils photographiques devant être pilotés par le système et/ou en fonction d'une cadence de prise de vues des appareils en mode rafale,
- des moyens de mise en fonctionnement successif des appareils photographiques en mode rafale en réponse à un signal de déclenchement, les moyens étant pilotés par l'horloge de façon à mettre en fonctionnement les appareils selon une cadence de mise en fonctionnement supérieure à la cadence de prise de vues en mode rafale des appareils.

Comme la cadence de mise en fonctionnement est supérieure à la cadence de prise de vues en mode rafale, les appareils photographiques sont déclenchés de façon alternée de sorte qu'une cadence de prises de vues globale élevée peut être obtenue.

De façon optimisée, la fréquence d'horloge peut être fixée de telle façon que la cadence de mise en fonctionnement, notée Cs, soit : Cs=N·Cr, où Cr et N sont respectivement la cadence de prise de vues en mode rafale des appareils photographiques utilisés et N le nombre d'appareils pilotés par le système.

La cadence de mise en fonctionnement est également la cadence globale de prise de vues de l'ensemble des appareils photographiques pilotés par le système.

A titre d'exemple, en utilisant 6 appareils photographiques dont la cadence Cr en mode rafale est de 8 images par seconde, la cadence de mise en fonctionnement et la cadence globale de prise de vues Cs est de 48 images par seconde.

Grâce aux moyens pour fixer la fréquence de l'horloge, il est possible, sans modifier la structure du système de déclenchement, de l'adapter instantanément à une utilisation avec un nombre variable N d'appareils photographiques et à une cadence quelconque Cr de déclenchement en mode rafale des appareils utilisés.

On suppose ici que tous les appareils utilisés présentent une cadence de déclenchement en mode rafale sensiblement identique.

La fréquence de l'horloge est fixée de préférence à une valeur multiple du produit Cr·N, c'est-à-dire une valeur multiple de la cadence Cs évoquée ci-dessus. Il est ainsi possible de provoquer la mise en fonctionnement successive des appareils avec une meilleure précision temporelle.

Selon un aspect particulier de l'invention, le système de déclenchement peut en outre comporter un temporisateur pour fixer une durée totale de prise de vues et pour suspendre le fonctionnement des appareils photographiques lorsque la durée totale fixée est expirée.

Les événements que l'on souhaite photographier avec une cadence de prise de vues élevée sont généralement des événements transitoires ou des événements rapides dont la durée globale n'excède pas quelques secondes.

Ainsi, grâce au temporisateur, il est possible d'interrompre la série de prise de vues avant l'achèvement de la bobine de film logée dans chaque appareil, et de recommencer une nouvelle série à un instant ultérieur.

A titre d'illustration, en utilisant des appareils photographiques dont la cadence de prise de vues en mode rafale est de 8 images/sec et en fixant la durée totale de prise de vues à 2 secondes, il est possible d'enregistrer deux séries de prises de vues (16 images par série) sur un film standard à 36 poses.

La fixation d'une durée inférieure à la durée d'épuisement du film permet ainsi de multiplier les séries de prise de vues sans recharger les appareils. Elle constitue un avantage important pour des prises de vues en milieu hostile et permet, par exemple, dans le cas de l'étude de projectiles, de parer à un défaut de mise à feu.

Selon un autre aspect de l'invention, le système de déclenchement peut comporter des moyens pour fournir un signal de déclenchement et des moyens de transmission à distance du signal de déclenchement vers une entrée de déclenchement du système de déclenchement.

Dans leur expression la plus simple, les moyens pour fournir un signal de déclenchement peuvent comporter un simple interrupteur de déclenchement actionnable par un opérateur et conçu pour fermer un circuit de déclenchement associé.

Ces moyens peuvent aussi comporter un dispositif de compte à rebours du type de ceux utilisés, par exemple, pour la mise à feu de propulseurs d'un projectile.

Grâce aux moyens de transmission à distance du signal de déclenchement, il est possible d'utiliser le système dans un environnement hostile incompatible avec la présence humaine. Il permet aussi de déporter des équipements lourds en un lieu éloigné du sujet de prise de vues.

Les moyens de transmission peuvent inclure, par exemple, des lignes de transmission symétriques, des lignes de transmission par voie optique ou des émetteurs-récepteurs pour une transmission par voie hertzienne.

Lorsque le système est destiné à un fonctionnement autonome et isolé, il peut aussi être équipé de moyens d'alimentation électrique tels qu'une pile ou un accumulateur électrique.

L'invention concerne également un équipement de prise de vues comprenant une pluralité d'appareils photographiques présentant chacun un mode de prise de vues en rafale, et un système de déclenchement tel que décrit ci-dessus.

L'équipement de prise de vues peut comporter un seul système de déclenchement ou une pluralité de systèmes de déclenchement reliés chacun respectivement à une pluralité d'appareils photographiques. Dans ce cas, les systèmes de déclenchement sont pilotés par une horloge unique et comportent des moyens de mise en fonctionnement des appareils photographiques avec des compteurs synchronisés.

La multiplication du nombre de systèmes de déclenchement, et du nombre total d'appareils photographiques pilotés, permet d'augmenter encore la cadence de prise de vues et/ou permet de multiplier le nombre d'emplacements à partir desquels les prises de vues sont effectuées.

A titre d'exemple, les différents systèmes de déclenchement peuvent être synchronisés de façon à provoquer des déclenchements successifs et décalés dans le temps de tous les appareils. Ils peuvent également être synchronisés de façon à provoquer le déclenchement simultané d'une pluralité d'appareils photographiques appartenant respectivement à une pluralité de batteries d'appareils, situées en des lieux différents.

Selon une mise en oeuvre particulière, le système de déclenchement de l'équipement de prise de vues peut également comporter des moyens de transmission à distance de signaux de mise en fonctionnement, aux appareils photographiques respectivement associés.

Ces moyens permettent de séparer à une distance importante le ou les systèmes de déclenchement et les appareils photographiques pilotés.

Les moyens de transmission de signaux peuvent comporter, par exemple, des lignes bifilaires symétriques, des moyens de transmission par voie optique et/ou des moyens de transmission par voie hertzienne.

D'autres caractéristiques et avantages de l'invention ressortiront mieux de la description qui va suivre, en référence aux figures des dessins annexés. Cette description est donnée à titre purement illustratif et non limitatif.

### Brève description des figures

- La figure 1 est une représentation schématique simplifiée d'un équipement de prise de vues conforme à l'invention,
- la figure 2 est un chronogramme montrant des signaux de déclenchement fournis par un système de déclenchement de l'équipement de la figure 1,
- la figure 3 est une représentation schématique simplifiée d'un équipement de prise de vues équipé d'une pluralité de systèmes de déclenchement.

### Description détaillée de modes de mise en oeuvre de l'invention

La référence 10 désigne de façon générale un système de déclenchement correspondant à une mise en oeuvre particulière de l'invention.

Le système de déclenchement 10 comporte une horloge 12 sous la forme d'un oscillateur dont la fréquence peut être commandée par un circuit type RC (Résistance Capacité).

A cet effet, l'oscillateur est relié à un sélecteur 14 permettant d'appliquer à une entrée de commande différentes valeurs de résistance correspondant à différentes fréquences d'horloge. La fréquence et le rapport cyclique du signal d'horloge sont fixés, par exemple, par des résistances 16 dont un seul élément est représenté.

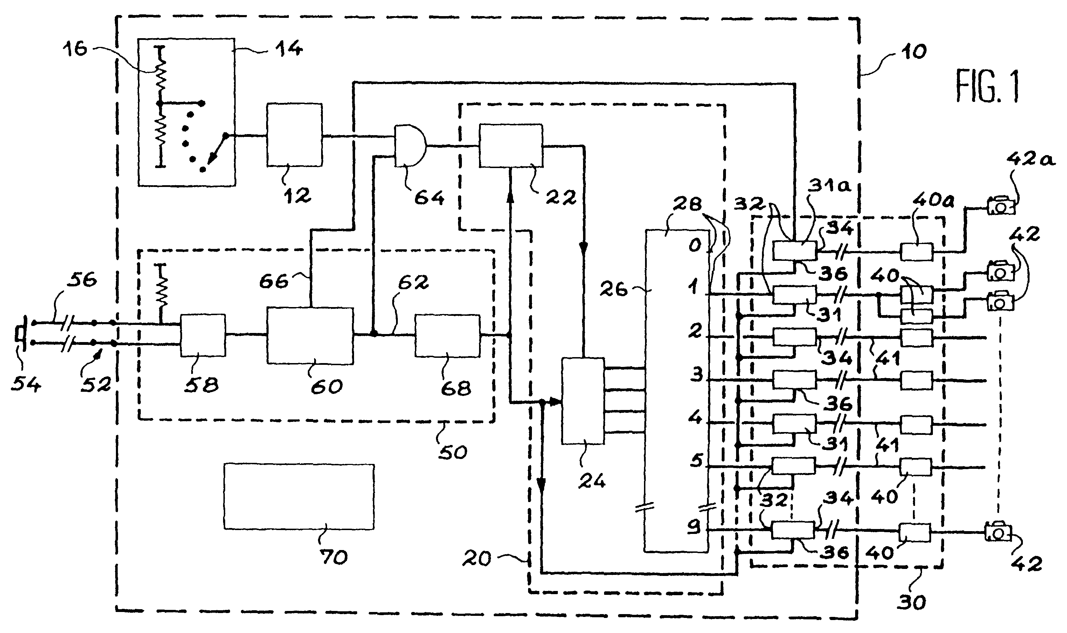

La commande des fréquences peut être du type continu ou, comme illustré par la figure 1, une commande par valeurs discrètes présélectionnées. Les valeurs présélectionnées correspondent, par exemple, à différentes fréquences adaptées à la commande d'un nombre variable d'appareils photographiques et/ou à la commande d'appareils ayant différentes cadences de prise de vues en mode rafale.

L'horloge délivre ainsi des impulsions à une fréquence qui est un multiple de Cr·N, c'est-à-dire un multiple du produit de la cadence Cr en mode rafale des appareils photographiques par le nombre N d'appareils photographiques pilotés.

Les impulsions d'horloge sont délivrées à un ensemble de comptage 20. L'ensemble de comptage comporte un ou plusieurs diviseurs de fréquence destinés à ramener avec une bonne précision la fréquence d'horloge à la valeur Cr·N. Dans l'exemple illustré, un seul diviseur de fréquence est représenté avec la référence 22.

L'ensemble de comptage 20 comporte en outre un compteur binaire 24 et un convertisseur binaire/décimal 26.

Le compteur binaire 24, de type BCD (binaire Codé Décimal) reçoit le signal d'horloge divisé et délivre un signal de comptage binaire.

Le signal de comptage binaire est transmis au convertisseur 26. Celui-ci comporte une pluralité de sorties 28, par exemple dix sorties, qui délivrent des impulsions successivement l'une après l'autre, en réponse au signal de comptage. Les impulsions fournies par le convertisseur se succèdent à une cadence imposée par la fréquence d'horloge (divisée) appliquée au compteur binaire 24.

A chaque sortie 28 du convertisseur 26 est reliée une bascule RS 31. Les bascules 31 présentent chacune une sortie 34 qui peut passer d'un état logique dit "inactif" à un état logique dit "actif" en réponse respectivement à une impulsion délivrée par le convertisseur 26 à leur entrée de signal 32. Les bascules 31 présentent en outre une entrée de remise à zéro 36 dont le rôle est décrit plus loin.

Les états actif et inactif correspondent, par exemple, aux états logiques 0 et 1.

Les sorties 34 des bascules 31 sont reliées à des relais de commande 40 par l'intermédiaire de lignes repérées avec la référence 41. Les lignes peuvent être, par exemple, des lignes différentielles équipées d'émetteurs et de récepteurs de ligne non représentés.

Lorsque les distances entre les bascules 31 et les relais 41 sont petites, une ligne par simple fil est également utilisable.

Les relais, à un ou plusieurs contacts, peuvent être reliés aux bornes de déclenchement d'un ou de plusieurs appareils photographiques 42. Un relais commande un appareil photographique. En réponse à un état logique "actif" délivré par une bascule associée, les relais mettent respectivement en contact entre elles les bornes de déclenchement des appareils. Ceci a pour effet de déclencher les appareils photographiques 42 qui sont par ailleurs réglés pour fonctionner selon le mode en rafale. Les appareils 42 prennent ainsi des vues successives à leur cadence de rafale propre Cr aussi longtemps que leurs bornes de déclenchement sont reliées, c'est-à-dire aussi longtemps que la bascule 31 associée délivre un état logique actif.

Tous les appareils photographiques reliés à un même relais prennent des vues de façon sensiblement simultanée dans la mesure où tous ces appareils présentent sensiblement la même cadence Cr en mode rafale.

Des appareils reliés à des relais différents, c'est-à-dire associés à des sorties 28 différentes du convertisseur 26 prennent des vues respectivement décalées dans le temps d'une durée inversement proportionnelle à la fréquence de l'horloge (divisée). Chaque appareil cependant, pris individuellement, effectue une série de prises de vues, toujours à sa cadence propre Cr en mode rafale.

Comme résultat, on obtient, pour un ensemble N d'appareils associés à un nombre équivalent de sorties 28 du convertisseur 26, une cadence globale de N·Cr, comme évoqué précédemment.

L'ensemble formé par les bascules RS 31, les lignes 41 et les relais est repéré avec la référence générale 30 et est désigné par "interface de commande" dans la suite du texte. Par ailleurs, l'interface de commande 30 forme avec l'ensemble de comptage 20, les moyens de mise en fonctionnement des appareils photographiques, au sens de l'invention.

Le système de déclenchement 10 présente une entrée de déclenchement 52 susceptible d'être reliée à des moyens aptes à former un signal de déclenchement.

Dans l'exemple de la figure 1, ces moyens comportent un simple interrupteur 54 capable de relier deux fils d'une ligne de transmission 56 à un même potentiel électrique.

Selon la distance qui sépare l'interrupteur 54 de l'entrée de déclenchement 52, d'autres moyens de transmission d'un signal de déclenchement peuvent être prévus. Pour des distances très grandes, en particulier, une transmission par voie hertzienne peut être prévue.

Un premier circuit de mise en forme 58, connecté à l'entrée 52, est prévu pour former un signal logique de déclenchement avec une forme appropriée, en réponse à la fermeture de l'interrupteur 54.

Ce signal est transmis à un circuit temporisateur réglable 60, avec une sortie logique 62. Ce circuit temporisateur a une double fonction d'initier et d'interrompre la prise de vues de l'ensemble des appareils photographiques.

En réponse à un signal de déclenchement, le temporisateur 60 délivre un état logique dit d'"autorisation" (par exemple 1) qui est appliqué à une porte ET 64. Ceci a pour effet d'autoriser la transmission d'impulsions d'horloge depuis l'horloge 12 vers l'ensemble de comptage 20 et de provoquer le passage successif des bascules 31 de l'état inactif à l'état actif.

On peut observer sur la figure 1 que le temporisateur présente également une deuxième sortie logique 66 reliée directement à l'une des bascules RS repérée avec la référence 31a. La bascule 31a en question n'est pas reliée à l'ensemble de comptage 20 comme les autres bascules, mais est directement commandée par le temporisateur 60.

Grâce à cette réalisation particulière, avantageuse mais non indispensable, le déclenchement de la prise de vues d'un premier appareil photographique 42a peut être parfaitement synchronisé avec le signal de déclenchement fourni à l'entrée 52.

La bascule 31a commandée directement par le temporisateur 60, est reliée au premier appareil 42a au moyen d'un relais désigné par la référence 40a. Ce relais est cependant similaire aux autres relais 40 de l'interface de commande 30 dont il fait également partie.

Le temporisateur 60 est réglable par l'utilisateur pour fixer une durée de prise de vues pour l'ensemble des appareils photographiques.

Cette durée peut être comptée à partir de l'instant où le signal de déclenchement est reçu, ou éventuellement à partir d'un instant ultérieur retardé.

Lorsque la durée est écoulée, le temporisateur délivre un état logique dit d'"inhibition" (par exemple 0) qui est appliqué à la porte ET 64 et qui inhibe la transmission d'impulsions de l'horloge 12 vers l'ensemble de comptage 20.

Par ailleurs, l'état logique d'"inhibition" est appliqué à l'entrée de remise à zéro 36 de l'ensemble des bascules 31, 31a par l'intermédiaire d'un deuxième circuit de mise en forme 68. Il est également appliqué au diviseur 22 et au compteur binaire 24 pour les réinitialiser.

Le circuit de mise en forme 68 comporte pour l'essentiel une bascule monostable apte à délivrer une impulsion de remise à zéro en réponse à la détection du passage de l'état logique d'"autorisation" à l'état logique d'"inhibition" du temporisateur 60.

Dans la suite du texte, l'ensemble formé par le temporisateur 60 et les circuits de mise en forme 58, 68 est désigné par "circuit de commande" et est repéré avec la référence générale 50.

La référence 70 désigne des moyens d'alimentation autonomes tels qu'une pile ou une batterie reliée à l'ensemble des circuits électroniques du système de déclenchement 10.

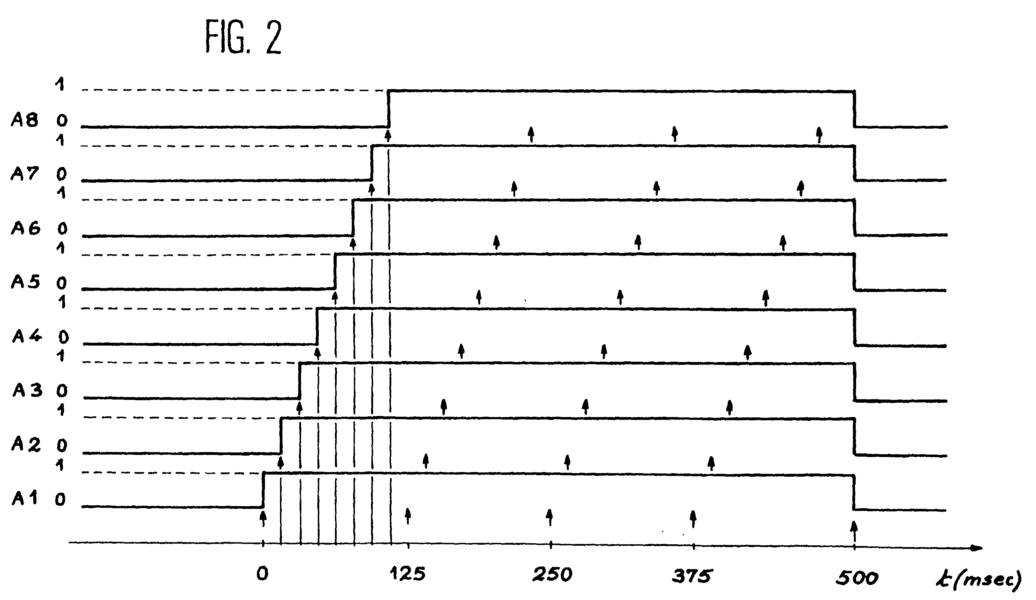

La figure 2 est un chronogramme indiquant respectivement l'état logique A1 à A8 de huit bascules 31, 31a, associées respectivement à huit appareils photographiques susceptibles de fonctionner en mode rafale. On considère dans l'exemple illustré que l'état logique 0 correspond à un appareil ne fonctionnant pas et que l'état 1 correspond à un appareil effectuant une prise de vues en mode rafale.
Par ailleurs, dans l'exemple illustré, pour des raisons de simplification, on considère que chaque appareil présente une cadence individuelle de prise de vues de 8 images par seconde, c'est-à-dire que chaque appareil prend une vue toutes les 125 msec.

L'instant 0 sur l'axe des abscisses indique l'instant de réception du signal de déclenchement. Cet instant correspond aussi à la mise en fonctionnement du premier appareil.

Après une durée correspondant au huitième du temps mis entre deux prises de vues successives, c'est-à-dire après 15,6 msec environ, le deuxième appareil est mis en fonctionnement.

La mise en fonctionnement successive des appareils est ainsi itérée toutes les 15,6 msec environ jusqu'à ce tous les appareils fonctionnent (en mode rafale).

Les instants des prises de vues de chaque appareil sont indiqués par de petites flèches.

On observe que, pour l'ensemble des appareils, un déclenchement a lieu toutes les 15,6 msec environ, ce qui correspond sensiblement à 64 images par seconde.

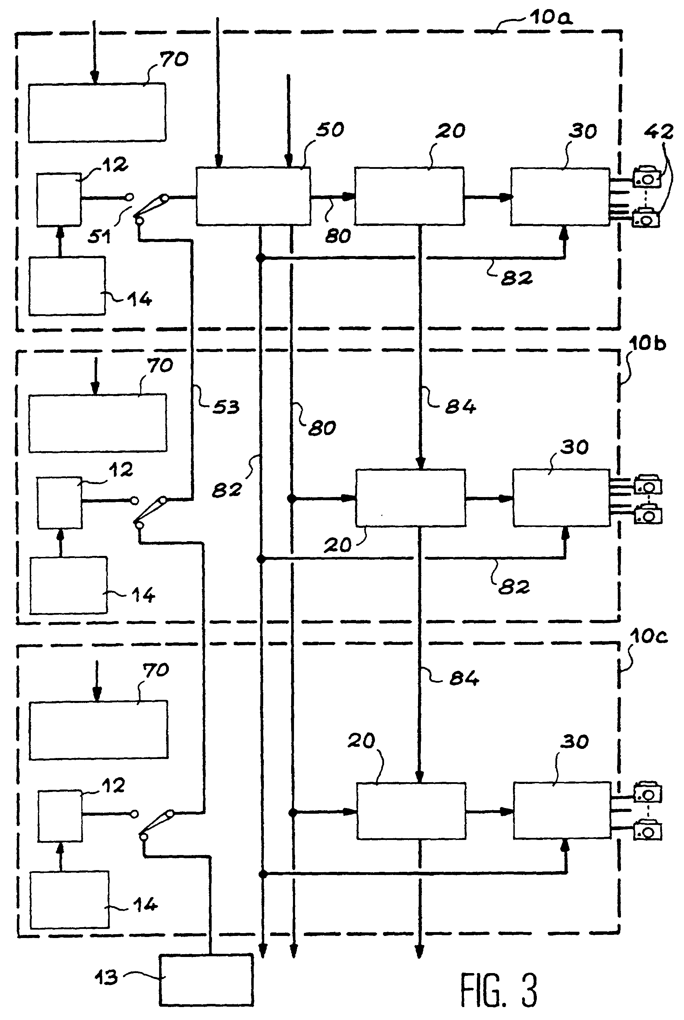

La figure 3 montre un équipement de prise de vues comprenant trois systèmes de déclenchement 10, 10b, 10c comparables à celui décrit en référence à la figure 1.

Des parties identiques ou similaires à celles de la figure 1 portent les mêmes références et leur description n'est pas reprise ici.

L'un des systèmes de déclenchement 10a est utilisé pour piloter les autres systèmes 10b, 10c. Il est désigné par "système maître", par opposition aux autres systèmes 10b, 10c désignés par "systèmes esclaves".

Le circuit de commande 50 du système de déclenchement maître 10a est muni d'un commutateur 51 pour pouvoir le relier soit à l'horloge interne 12, soit à une horloge externe 13 dont les impulsions sont reçues en une entrée de signal d'horloge.

Dans l'exemple décrit ici, chaque système de déclenchement est associé à six appareils photographiques. Ceux-ci peuvent être commandés pour être successivement déclenchés les uns après les autres ou de telle façon qu'un appareil soit déclenché simultanément respectivement par chacun des systèmes de déclenchement.

Selon le cas, la fréquence de l'horloge est réglée pour correspondre à un multiple de Cr·N où N est le nombre total d'appareils photographiques, soit pour correspondre à un nombre Cr·n où n est le nombre d'appareils photographiques associé respectivement à chaque système de déclenchement.

Les états logiques d'"autorisation" de prise de vues sont transmis à chaque ensemble de comptage 20 des systèmes par l'intermédiaire du circuit de commande 50 du système de déclenchement maître 10a et par l'intermédiaire de connexions repérées avec la référence 80. De la même façon, les signaux de remise à zéro sont transmis à l'ensemble des interfaces de commande 30 des appareils photographiques, par des connexions portant la référence 82.

Enfin, on observe que les ensembles de comptage 20 des systèmes esclaves sont reliés entre eux, et au système maître, par des lignes 84, de façon à synchroniser leurs compteurs.

Le nombre de systèmes de déclenchement mis en chaîne conformément au schéma de la figure 3 peut être augmenté en multipliant les systèmes de déclenchement esclaves.

### DOCUMENTS CITES

***(1)***
   Le Courrier Professionnel (KODAK), Avril 1990, n° 109, page 50.
***(2)***
   UNLIMITED, magazine Fujifilm, Mars 1999, n° 13, page 12.

## Revendications

1. Système (10, 10a, 10b, 10c) de déclenchement séquentiel pour une pluralité d'appareils photographiques (42, 42a) équipés d'un mode de prise de vues en rafale, comprenant :
- une horloge (12) et des moyens (14, 16) pour fixer une fréquence d'horloge de ladite horloge en fonction d'un nombre d'appareils photographiques devant être pilotés par le système et/ou en fonction d'une cadence de prise de vues des appareils en mode rafale,
- des moyens (20, 22, 24, 26, 30) de mise en fonctionnement successif des appareils photographiques en mode rafale en réponse à un signal de déclenchement, les moyens étant pilotés par l'horloge de façon à mettre en fonctionnement les appareils selon une cadence de mise en fonctionnement supérieure à la cadence de prise de vues en mode rafale.

2. Système de déclenchement selon la revendication 1, comportant en outre des moyens pour fixer la fréquence d'horloge de telle façon que la cadence de mise en fonctionnement, notée Cs, soit : Cs=N·Cr, où Cr et N sont respectivement la cadence de prise de vues en mode rafale des appareils photographiques utilisés et N le nombre d'appareils pilotés par le système.

3. Système de déclenchement selon la revendication 1, comprenant en outre un temporisateur (60) pour fixer une durée totale de prise de vues et pour suspendre le fonctionnement des appareils photographiques lorsque la durée totale fixée est expirée.

4. Système de déclenchement selon la revendication 1, dans lequel les moyens (20, 30) de mise en fonctionnement des appareils photographiques comportent un compteur (24, 26) relié à l'horloge (12) par l'intermédiaire de diviseurs de fréquence (22).

5. système de déclenchement selon la revendication 4, dans lequel le compteur comporte un compteur BCD (24) (Binaire Codé Decimal) et un convertisseur BCD-décimal (26).

6. Système de déclenchement selon la revendication 1, comprenant des moyens (70) d'alimentation électrique autonomes.

7. Système de déclenchement selon la revendication 1, comprenant une entrée de signal d'horloge et un commutateur (51) pour sélectionner un signal d'horloge provenant de l'entrée de signal d'horloge ou d'une horloge interne (12).

8. Equipement de prise de vues comprenant :
- une pluralité d'appareils photographiques (42) présentant chacun un mode de prise de vues en rafale, et
- au moins un système de déclenchement séquentiel (10, 10a, 10b, 10c) relié à la pluralité d'appareils photographiques,
**caractérisé en ce que** le système de déclenchement est conforme à l'une quelconque des revendications précédentes.

9. Equipement selon la revendication 8, comprenant des moyens (54) pour fournir un signal de déclenchement et des moyens (56) de transmission à distance du signal vers une entrée (52) du système de déclenchement.

10. Equipement selon la revendication 9, dans lequel les moyens pour fournir un signal de déclenchement comportent un interrupteur.

11. Equipement selon la revendication 10, dans lequel les moyens pour fournir un signal de déclenchement comportent un système de compte à rebours.

12. Equipement de prise de vues selon la revendication 8, comprenant une pluralité de systèmes de déclenchement reliés chacun respectivement à une pluralité d'appareils photographiques (42), dans lequel les systèmes de déclenchement sont reliés à une horloge unique (13) et comportent des moyens (20) de mise en fonctionnement des appareils photographiques avec des compteurs synchronisés.

13. Equipement de prises de vues selon la revendication 8, dans lequel le système de déclenchement comprend des moyens (41) de transmission à distance de signaux de mise en fonctionnement, aux appareils photographiques respectivement associés.

14. Equipement selon la revendication 12, dans lequel les moyens de transmission de signaux de mise en fonctionnement sont choisis parmi le groupe comprenant des moyens de transmission par ligne bifilaire symétrique, des moyens de transmission par voie optique et des moyens de transmission par voie hertzienne.

15. Equipement selon la revendication 8, dans lequel les moyens de mise en fonctionnement du système de déclenchement comportent un compteur (24, 26), relié aux appareils photographiques par l'intermédiaire de bascules RS (31) et de relais de déclenchement (40).

## Patentansprüche

1. System (10, 10a, 10b, 10c) zur Folgeauslösung mehrerer für einen Kettenbetrieb ausgerüsteter Kameras (42, 42a), umfassend:
- einen Taktgeber (12) und Einrichtungen (14, 16) zur Festlegung einer Taktfrequenz dieses Taktgebers in Abhängigkeit von einer Anzahl durch das System zu steuernder Kameras und/oder in Abhängigkeit von einem Aufnahmetakt der Kameras im Kettenbetrieb,
- Einrichtungen (20, 22, 24, 26, 30) zur sukzessiven Inbetriebnahme der Kameras im Kettenbetrieb als Reaktion auf ein Auslösesignal, wobei die Einrichtungen durch den Taktgeber so gesteuert werden, dass die Inbetriebnahme der Kameras entsprechend einem Inbetriebnahmetakt erfolgt, der höher ist als der Aufnahmentakt im Kettenbetrieb.

2. Auslösesystem nach Anspruch 1, das außerdem Einrichtungen umfasst, die ermöglichen, die Taktfrequenz so festzulegen, dass der Inbetriebnahmetakt Cs = N·Cr ist, wobei Cr der Aufnahmentakt der verwendeten Kameras im Kettenbetrieb ist und N die Anzahl der durch das System gesteuerten Kameras.

3. Auslösesystem nach Anspruch 1, das außerdem einen Zeitgeber (60) umfasst, um eine Gesamtaufnahmedauer festzulegen und um den Betrieb der Kameras zu unterbrechen, wenn die festgelegte Gesamtdauer abgelaufen ist.

4. Auslösesystem nach Anspruch 1, bei dem die Einrichtungen (20, 30) zur Inbetriebnahme der Kameras einen Zähler (24, 26) umfassen, der mit dem Taktgeber (12) durch Frequenzteiler (22) verbunden ist.

5. Auslösesystem nach Anspruch 4, bei dem der Zähler einen Zähler (24) des Typs BCD (binärer Dezimalcode) und einen BCD-Dezimal-Konverter (26) umfasst.

6. Auslösesystem nach Anspruch 1, das autonome Stromversorgungseinrichtungen (70) umfasst.

7. Auslösesystem nach Anspruch 1, das einen Taktsignaleingang und einen Umschalter (51) umfasst, der ermöglicht, ein Taktsignal zu wählen, das entweder von dem Taktsignaleingang oder von einem internen Taktgeber (12) stammt.

8. Bildaufnahmenvorrichtung, umfassend:
- eine Vielzahl Kameras (42), jede ausgerüstet für einen Kettenaufnahmenbetrieb, und
- wenigstens ein mit der Vielzahl Kameras verbundenes Folgeauslösungssystem (10a, 10b, 10c),
**dadurch gekennzeichnet, dass** das Auslösesystem mit einem der vorangehenden Ansprüche konform geht.

9. Vorrichtung nach Anspruch 8, die Einrichtungen (54) zum Liefem eines Auslösesignals umfasst sowie Einrichtungen (56) zur Übertragung des Signals zu einem Eingang (52) des Auslösesystems.

10. Vorrichtung nach Anspruch 9, bei der die Einrichtungen, die das Auslösesignal liefern, einen Schalter umfassen.

11. Vorrichtung nach Anspruch 10, bei der die Einrichtungen, die das Auslösesignal liefern, ein Countdown-System umfassen.

12. Vorrichtung nach Anspruch 8, eine Vielzahl Auslösesysteme umfassend, von denen jedes jeweils mit einer Vielzahl Kameras (42) verbunden ist, bei dem die Auslösesysteme mit einem einzigen Taktgeber (13) verbunden sind und Einrichtungen (20) zur Inbetriebnahme der Kameras mit synchronisierten Zählern umfassen.

13. Vorrichtung nach Anspruch 8, bei der das Auslösesystem Einrichtungen (41) zur Femübertragung von Inbetriebnahmesignalen zu den jeweils verbundenen Kameras umfassen.

14. Vorrichtung nach Anspruch 13, bei der die Übertragungseinrichtungen von Inbetriebnahmesignalen ausgewählt werden unter symmetrischen Doppelleitungs-Übertragungseinrichtungen, optischen Übertragungseinrichtungen und Funkübertragungseinrichtungen.

15. Vorrichtung nach Anspruch 8, bei der die Inbetriebnahmeeinrichtungen des Auslösesystems einen Zähler (24, 26) umfassen, verbunden mit den Kameras durch RS-Kippschaltungen (31) und Auslöserelais (40).

## Claims

1. System (10, 10a, 10b, 10c) for sequential triggering of several cameras (42, 42a) equipped with a burst mode, comprising:
- a clock (12) and means (14, 16) of fixing a clock frequency for the said clock as a function of the number of cameras to be controlled by the system and/or as a function of the rate at which cameras can take pictures in burst mode,
- means (20, 22, 24, 26, 30) of successively starting the operation of the cameras in burst mode in response to a trigger signal, the means being controlled by the clock so as to put the cameras into operation at an operating rate faster than the rate at which the cameras take pictures in burst mode.

2. Trigger system according to claim 1, also incorporating means for fixing the clock frequency such that the operating rate, denoted Cs, is equal to N.Cr where Cr and N are respectively the rate at which the cameras used take pictures in burst mode, and N is the number of cameras controlled by the system.

3. Trigger system according to claim 1, also comprising a timer (60) to fix the total picture taking time and to suspend the operation of cameras when the total fixed duration has expired.

4. Trigger system according to claim 1, in which the means (20, 30) of controlling operation of the cameras include a counter (24, 26) connected to the clock (12) through frequency dividers (22).

5. Trigger system according to claim 4, in which the counter comprises a BCD (Binary Coded Decimal) counter (24) and a BCD-decimal converter (26).

6. Trigger system according to claim 1, comprising standalone electrical power supply means (70).

7. Trigger system according to claim 1, comprising a clock signal input and a switch (51) to select a clock signal originating from the clock signal input or an internal clock (12).

8. Picture taking equipment comprising:
- a plurality of cameras (42) each with a burst mode, and
- at least one sequential trigger system (10, 10a, 10b, 10c) connected to the plurality of cameras,
**characterized in that** the trigger system is conform with claim 1.

9. Equipment according to claim 8, comprising means (54) of outputting a trigger signal and means (56) of remote transmission of the signal to an input (52) of the trigger system.

10. Equipment according to claim 9, in which means of outputting a trigger signal comprising a switch are provided.

11. Equipment according to claim 10, in which means of providing a trigger signal comprise a countdown system.

12. Picture taking equipment according to claim 8, comprising a plurality of trigger systems each connected respectively to a plurality of cameras (42) in which the trigger systems are connected to a single clock (13) and comprise means (20) of putting cameras with synchronized counters into operation.

13. Picture taking equipment according to claim 8, in which the trigger system comprises remote transmission means (41) for transmitting start signals to the respectively corresponding cameras.

14. Equipment according to claim 12, in which the transmission means for transmitting start signals are chosen from the group including transmission means using symmetric two-wire lines, optical transmission means, and radio transmission means.

15. Equipment according to claim 8, in which the means of controlling operation of the trigger system comprise a counter (24, 26), connected to the cameras through flip-flops RS (31) and trigger relays (40).
